# EUROPEAN PATENT APPLICATION

(11) **EP 1 607 525 A1**
(43) Date of publication of application: **21.12.2005**
(21) Application number: 05380128.8
(22) Date of filing: 15.06.2005
(51) Int. Cl.: E01C 9/00, A01G 13/02

(54) **A contractible protective element for tree trunks and application thereof**

(30) Priority: 18.06.2004 ES 200401498
(71) Applicant: Martin Moraga, David, 28904 Getafe (ES); Martin Moraga, Oliver, 28904 Getafe (ES); Gomez Jimenez, Mario, 28904 Getafe (ES)
(72) Inventor: Martin Moraga, David, 28904 Getafe (ES); Martin Moraga, Oliver, 28904 Getafe (ES); Gomez Jimenez, Mario, 28904 Getafe (ES)
(74) Representative: Manzano Cantos, Gregorio

(57) **Abstract**

A contractible protective element for tree trunks and the application thereof, consisting of the "in situ" formation or prefabrication of an elastomer to cover and protect the space reserved between the plant or tree trunk and the basin cover plate, with suitable resilience so as to assimilate trunk growth, resistance to withstand environmental loads and necessary capillarity to absorb rain water, liquids and the like.

## Description

### OBJECT OF THE INVENTION

The object of the invention is to create a member "in situ" or a premanufactured member with resilient properties which, by way of an addition, is assembled mainly in basin covers, and more specifically in the space contained between the tree trunk and said cover so that the trunk may project through it, while at the same time being a protective member for said trunk with essential advantages to assure its natural evolution and to allow that cover drainage functions, if it has any, are increased also by the drainage conditions of said protective element.

Therefore, the object of the present invention is to protect plants or tree trunks incorporating any type of basin cover, whether these are a grate, porous pavement or an element embedded in the pavement.

Basins currently represent a serious obstacle for any pedestrian and particularly for those people with physical, psychic or sensory disabilities, preventing them from freely using public walkways. As provided by the Spanish Constitution, the LISMI (Disabled Persons Social Integration Law), Law 8/1993 dated July 23 and Royal Decree 138/1993, it is the responsibility of the public authorities to promote conditions for the freedom and equality of any individual, having the obligation to carry out a policy of prevention, treatment and rehabilitation of public routes.

In said preventions, cities have been incorporating for some time now a means for eliminating the basin cavity, using covers, grates, porous pavements or paving stones that completely cover the cavity left for watering or collecting rain water, the space constituted by the means being located flush to the ground to prevent problems resulting from unevenness of these features, as is known in the state of the art.

### BACKGROUND OF THE INVENTION

In relation to such means, the object of the invention is not foreseen since all covers or covering means are developed with the same philosophy, that is they are plates in any of the mentioned forms containing, regardless of other events resulting from their structure, a central, generally circular space of greater or lesser diameter so as to assure the vital space needed by the plant or tree trunk for its normal volumetric growth.

Said covers are normally manufactured such that they can assure drainage by assuring water or liquid filtration, on one hand for assuring the surface watering of the plant or tree, and on the other the absorption of rain water.

The so-called porous pavements such as those contained in patent number 9700040 of M.J. Pérez for "A New Process for the In Situ Manufacture of Jointless Pavement", and Utility Model number 9801219 of Señalización y Diseños Urbanos, S.A. for "Porous Pavement", which refer to a manner of building said covers with said central space for the plant or tree to project through, have become established among these covers due to their special filtration, uniformity and surface resistance features.

However on most occasions they do not withstand the trunk size increase due to unavoidable tree growth. They choke, crack and damage the trunk, affecting normal plant or tree growth. This strains the plate or cover, grate or porous concrete since they offer considerable resistance and difficulty for the tension of the stress due to their rigid structure and may eventually break.

### DESCRIPTION OF THE INVENTION

According to the invention said drawbacks are advantageously and completely eliminated by means of creating a protective member for the tree trunk based on elastomeric materials derived from natural or synthetic rubber. These resilient and flexible materials allow normal growth for the trunk without undergoing any damage, providing protection for the plant or tree trunk without straining it or affecting the type of plate or cover installed to cover the basin, reacting due to compression in a first transverse stress and due to expansion in a second and subsequent stresses to withstand the expansion, strain or growth of the plant or tree, and to assure the integrity of said plate or cover.

According to the invention, said protective member is carried out "in situ" or is prefabricated based on new or used elastomeric materials. These materials can be natural rubber (NR) derivatives, styrene butadiene rubber (SBR), ethylene propylene diphenol (EPDM) rubber, silicone (VMQ) rubber or other types which can be used as a continuous cord, or based on granulates of different sizes which will be bound by an adhesive component or synthetic polymeric resin, epoxy resin or the like. Said resin is useful as a co-binder for compacting said synthetic granules respecting the elasticity of the materials, forming a contractible flexible protective space for trees and maintaining the permeable or filtering possibilities of its structure to also be useful as a drainage member.

Obtaining the object of the invention by means of the use of granules will be carried out in mortar or backfilling form, similar to the system used in concrete mortars in which the granulated elastomeric elements are mixed with a percentage of resin or adhesive components. This elastomeric and resin base is deposited in the reserve or space left between the plant or tree trunk and the plate, cover, porous concrete or other installed system, thus forming around the periphery thereof a resilient and compressible protective area for the tree.

It can also be mentioned that the granulated elastomeric or jointless element as well as the adhesive component or resin co-binder can be dyed with one or several colors to provide them with a suitable or capricious decorative appearance.

A broader idea of the features of the invention will be explained below in reference to the sheets of drawings attached to this specification which show, in a somewhat schematic and only as an example, the preferred and essential details of the invention.

In the drawings:
Figure 1 shows a vertical section view in which the tree trunk (T), a protective plate, cover or porous pavement system formed by elastomeric materials (E), object of the present invention, arranged inside the pavement on the periphery of the tree trunk (T), can be seen.
Figure 2 shows a possible growth of the tree trunk (T), where the new protective system (E) compressibly adjusts to the growth of said trunk (T) as a result of its resilient, contractible and flexible capacity, with no damage to the tree and the basin cover system.
Figure 3 shows a plan view of a basin provided with a system covering the cavity of the basin (P) and the protective element of the present invention (E) surrounding the tree trunk (T).
Figure 4 shows a sectional view of the resilient protective element (E) formed by a mass of irregular granules (G) of a natural or synthetic elastomeric material bound together by a co-binding resin or epoxy solution or the like (R) assuring their porous compaction so as to maintain uniformity and drainage capacity thereof, and to maintain the contractible capacity thereof, as can be seen in the compression reaction of the arrows (E1) to a growth (T1) of the trunk (T), and an expansion reaction (E2) to a larger growth (T2) of the trunk (T).

### PREFERRED EMBODIMENT OF THE INVENTION

The preferred embodiment of the invention is made up of the formation of the elastomeric material of the invention in the space (S) between the cover plate (P) of the basin, formed by a simple granulate mixture (G), the granules being of different sizes, irregular, of natural rubber, co-bound or joined by means of any binding resin (R) such that it assures the setting thereof without completely closing its structure so as to assure a given porosity so that once said combination is set and dried, it has the necessary hardness to assure sufficient resistance against the weight of pedestrians and others, that it has the necessary capillarity to facilitate its drainage and that it has the necessary resilience so as to withstand the growth of the trunk (T).

Formation of the elastomeric material of the invention will be done "in situ", pouring it in the way of a backfilling such that the co-binding resin (R) is also useful for fixing the elastomer to the cover plate or porous pavement (P), although according to the cases, when said plates (P) are pieces that are not made of ceramics, aggregates or the like, they may undergo prior treatment so that the elastomer can be introduced and fixed between it and the space (S) of said trunk (T), to which end the elastomeric element could also be prefabricated.

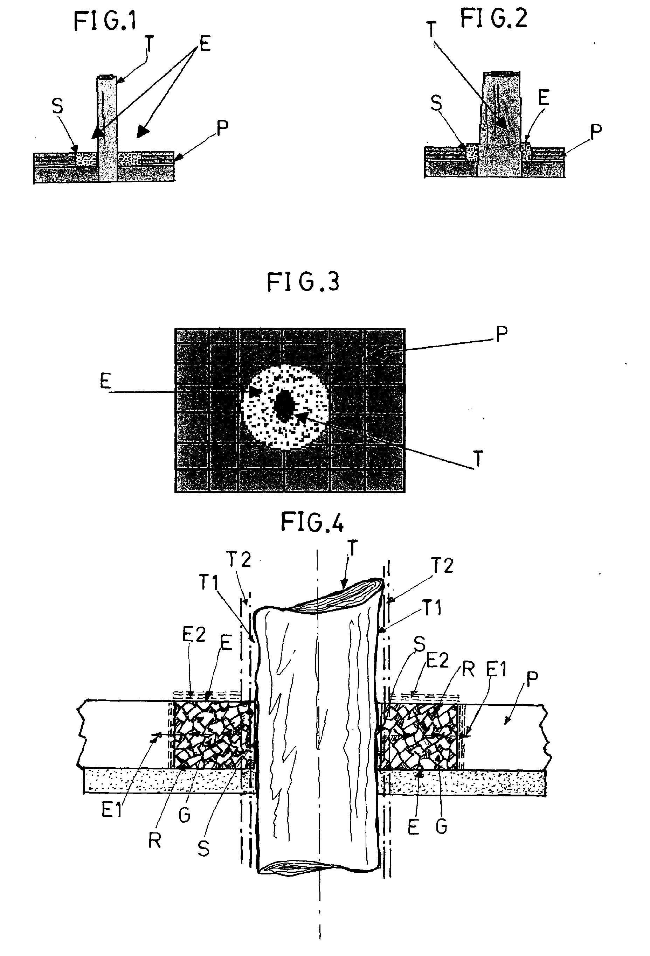

As shown in Figure 4, once the elastomer (E), which is poured in the manner of a backfilling in the space (S) between the plate (P) and the trunk (T), based on irregular granules (G) and co-binder (R), is formed, it reacts to the growth (T1) of the trunk (T) according to a contractible compressive stress (E1) and to a larger growth (T2) by means of an expansive stress (E2), at all times assuring the closure of the space (S) and the drainage capillarity for the elastomer (E).

Having sufficiently described the nature of the invention it is hereby stated that the invention is not limited to the exact details of this explanation, but which on the contrary those modifications considered suitable can be introduced therein as long as they do not alter the essential features thereof, which are claimed below.

## Claims

1. A contractible protective element for tree trunks and the application thereof in order to fill the space reserved between the plant, tree trunk or the like and the basin plate or cover in a stable, resistant and drain-capable manner, **characterized in that** it consists of forming an elastomeric filler (E) "in situ" or a prefabricated filler, which is emptied in the way of a backfilling in the space (S) reserved between the tree trunk (T) and the basin plate or cover (P), formed by a composition of irregularly shaped granules (G) of natural rubber or gum or the like bound by an epoxy resin or a similar co-binder (R) forming a body that is resistant to the weight of pedestrians or the like and with a drainage capillarity for absorbing rain water or liquids.

2. A contractible protective element for tree trunks and the application thereof, an elastomeric body of irregular co-bound granules which is **characterized in that** it resiliently reacts with compressive stresses (E1) to the first growths (T1) of the trunk (T), and with expansive stresses (E2) to successive growths (T2) without breaking.

3. A contractible protective element for tree trunks and the application thereof according to claim 1, the elastomeric filler is **characterized in that** it is dyed in one or several colors.

4. A contractible protective element for tree trunks and the application thereof according to claim 1, the co-binding resin means or adhesive products are **characterized in that** they are dyed in one or several colors.
